(19) Europäisches Patentamt
European Patent Office
Office européen des brevets

(11) **EP 3 567 816 B1**

(12) **EUROPEAN PATENT SPECIFICATION**

(45) Date of publication and mention
of the grant of the patent:
**15.06.2022 Bulletin 2022/24**

(21) Application number: **17890245.8**

(22) Date of filing: **27.12.2017**

(51) International Patent Classification (IPC):
***H04L 27/26*** (2006.01)    ***H04L 5/00*** (2006.01)

(52) Cooperative Patent Classification (CPC):
**H04L 27/2602; H04L 5/0007; H04L 27/2607;**
**H04L 27/2614; H04L 27/262; H04L 27/2621;**
H04L 5/0051; H04L 5/0053; H04L 5/0055

(86) International application number:
**PCT/CN2017/119139**

(87) International publication number:
**WO 2018/126973 (12.07.2018 Gazette 2018/28)**

(54) **SIGNAL TRANSMISSION METHOD AND DEVICE, AND STORAGE MEDIUM**

SIGNALÜBERTRAGUNGSVERFAHREN UND -VORRICHTUNG SOWIE SPEICHERMEDIUM

DISPOSITIF ET PROCÉDÉ D'ÉMISSION DE SIGNAL ET SUPPORT DE STOCKAGE

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **06.01.2017 CN 201710015168**
**06.02.2017 CN 201710065929**

(43) Date of publication of application:
**13.11.2019 Bulletin 2019/46**

(73) Proprietor: **ZTE Corporation**
**Shenzhen, Guangdong 518057 (CN)**

(72) Inventors:
• **HAN, Xianghui**
**Shenzhen**
**Guangdong 518057 (CN)**
• **XIA, Shuqiang**
**Shenzhen**
**Guangdong 518057 (CN)**
• **GOU, Wei**
**Shenzhen**
**Guangdong 518057 (CN)**
• **ZHANG, Wen**
**Shenzhen**
**Guangdong 518057 (CN)**
• **SHI, Jing**
**Shenzhen**
**Guangdong 518057 (CN)**
• **REN, Min**
**Shenzhen**
**Guangdong 518057 (CN)**

(74) Representative: **Aipex B.V.**
**P.O. Box 30223**
**3001 DE Rotterdam (NL)**

(56) References cited:
EP-A2- 2 557 749       EP-A2- 2 760 171
WO-A1-2012/086932    CN-A- 101 039 304
CN-A- 102 457 454      CN-A- 103 828 319
CN-A- 105 187 172

## Description

## TECHNICAL FIELD

The present disclosure relates to wireless communication technologies and, in particular, to a signal transmission method and device and a storage medium.

## BACKGROUND

The fifth-generation mobile communication technology (5G) provides a higher rate (generally Gbps), a huge number of links (1 M/km$^2$), an ultra-low latency (1 ms), a higher reliability, a 100 times energy efficiency improvement, etc. to satisfy the newly changed demand. This means a more flexible frame structure is required. Currently, two types of transmission time units (slots) are initially defined in the 5G standard: transmission time units that are mainly used for the downlink and transmission time units that are mainly used for the uplink. Both of the two types of transmission time units may contain uplink control symbols so that a Hybrid Automatic Repeat reQuest (HARQ) can be performed faster and self-contained feedback can be implemented if necessary.

In a 5G system, how to simultaneously transmit pilot signals and data while ensuring a lower peak-to-average ratio is an urgent problem to be solved.

Further relevant technologies are also known from EP2557749A2, (LG ELECTRONICS INC [KR]), 13 February 2013 (2013-02-13); and EP2760171A2, (LG ELECTRONICS INC [KR]), 30 July 2014 (2014-07-30).

## SUMMARY

A signal transmission method and device and a signal receiving method and device are provided in embodiments of the present disclosure. The feature of the method and device according to the present invention are defined in the independent claims. Further improvements are provided in the dependent claims. present disclosure data (signal) modulation is performed using part of sequence points in the first sequence while reference signals are transmitted using other sequence points in the first sequence. In this way, it is possible to simultaneously transmit reference signals and data while maintaining a low peak-to-average ratio.

## BRIEF DESCRIPTION OF DRAWINGS

Similar reference numbers in the accompanying drawings (which are not necessarily drawn to scale) may denote similar components in different schematic diagrams. The accompanying drawings generally illustrate the various embodiments discussed herein by way of example and not limitation.

FIG. 1 is a flowchart of a signal transmission method according to embodiment one of the present disclosure;
FIG. 2 is a flowchart of a signal receiving method according to embodiment one of the present disclosure;
FIG. 3 is a flowchart of a signal transmission method according to embodiment one of the present disclosure;
FIG. 4 is a schematic diagram illustrating that a user terminal modulates, on one symbol, data in odd-numbered points of a predefined sequence having a length of N (N = 12) according to embodiment two of the present disclosure;
FIG. 5 is a schematic diagram illustrating that a user terminal modulates, on one symbol, data in even-numbered points of a predefined Zadoff-Chu sequence having a length of N (N = 24) according to embodiment three of the present disclosure;
FIG. 6 is a schematic diagram illustrating that a user terminal transmits an SR and an ACK message simultaneously on one symbol according to embodiment five of the present disclosure;
FIG. 7 is a schematic diagram illustrating that a user terminal modulates, on two symbols, data in even-numbered points of a predefined Zadoff-Chu sequence having a length of N ( N =24) according to embodiment six of the present disclosure;
FIG. 8 is a schematic diagram illustrating that a user terminal maps, on one symbol, a predefined sequence onto evenly-spaced subcarriers in a frequency domain according to embodiment seven of the present disclosure;
FIG. 9 is a schematic diagram illustrating that a user terminal modulates, on one symbol, data at four predefined positions of a predefined sequence having a length of N (N = 12) according to embodiment eight of the present disclosure;
FIG. 10 is a schematic diagram illustrating that a user terminal modulates, on one symbol, data at three groups of positions of a predefined sequence according to embodiment nine of the present disclosure;
FIG. 11 is a structure diagram of a signal transmission device according to embodiment eleven of the present disclosure;

FIG. 12 is a structure diagram of a signal receiving device according to embodiment eleven of the present disclosure; and

FIG. 13 is a structure diagram of a signal transmission system according to embodiment eleven of the present disclosure.

## DETAILED DESCRIPTION

The present disclosure will be described below in further detail in conjunction with the accompanying drawings and the embodiments.

At present, an uplink control symbol may occupy only one or two orthogonal frequency division multiplexing (OFDM) symbols or single carrier-frequency division multiplexing access (SC-FDMA) symbols. In this case, the performance of a Physical Uplink Control Channel (PUCCH) may become a bottleneck for cell coverage. To this end, the uplink single-carrier property should be maintained as much as possible to support wider coverage. When the PUCCH occupies only one symbol, how to transmit a reference signal (pilot signal) and data (PUCCH) on one symbol while keeping a relatively low peak-to-average ratio becomes a problem.

Additionally, the PUCCH may be used to transmit an ACK message, a NACK message and a Scheduling Request (SR). In PUCCH Format 1/1a/1b, when the ACK/NACK message and the SR are simultaneously transmitted, the ACK/NACK message can be transmitted by using the channel resources of the SR, solving the problem of multiplexing of the two. However, when the number of symbols of the PUCCH is one, the channel structure designed by a 5G system may solve the problem of multiplexing between the ACK/NCK message and the SR efficiently.

On this basis, in various embodiments of the present disclosure, a transmitting end acquires a first sequence having a length of N, where N is a positive integer; and modulates a first modulation symbol at each of M positions of the first sequence, where the first modulation symbol represents a modulated signal, and M is a positive integer less than N; and transmits the first sequence carrying the first modulation symbol over a transmission symbol. Alternatively, the transmitting end divides the M positions of the first sequence into G groups, and modulates a same modulation symbol in each of the G groups, where the modulation symbol represents a modulated signal, G is an integer equal to or greater than 2, and G is equal to or less than N; and transmits the first sequence carrying the modulation symbol of each of the G groups over the transmission symbol. Further, a receiving end receives the first sequence carrying a corresponding modulation symbol over the transmission symbol, performs demodulation using sequence points at the M positions of the first sequence carrying the corresponding modulation symbol or performs non-coherent demodulation using all sequence points of the first sequence carrying the corresponding modulation symbol so that the corresponding modulation symbol is obtained.

Embodiment one

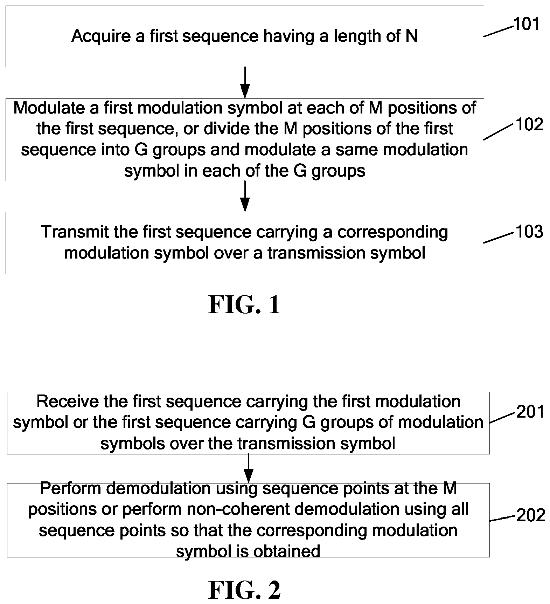

The signal transmission method of the embodiment of the present disclosure is applicable to a user terminal. As shown in FIG. 1, the method includes steps described below.

In step 101, a first sequence having a length of N is acquired.

Herein, N is a positive integer.

In practical use, the first sequence is a predefined sequence. That is, the user terminal has learned of the first sequence in advance.

In an embodiment, the first sequence may be obtained by different phase rotations of a second sequence in the frequency domain, and/or the first sequence may be obtained by different cyclic shifts of the second sequence in the time domain.

An amplitude of the second sequence may be a non-zero constant, and a length of the second sequence may be N.

The second sequence may be a Zadoff-Chu sequence or may be transformed from the Zadoff-Chu sequence.

In the latter case, the second sequence may be transformed from the Zadoff-Chu sequence in the following manner: the second sequence is obtained by truncation of the Zadoff-Chu sequence or by cyclic extension of the Zadoff-Chu sequence.

In the former case, when the second sequence is the Zadoff-Chu sequence, N is 12, 24 or 36.

In practical use, the second sequence may be a machine selected sequence obtained by quadrature phase shift keying (QPSK) phase modulation. In this case, N may be 12 or 24.

When the first sequence is obtained by different cyclic shifts of the second sequence in the time domain, the first sequence is included in a sequence set, and the sequence set includes K sequences obtained by different cyclic shifts of the second sequence in the time domain, where K is a positive integer, and

$$1 \le K \le \frac{N}{2}.$$

When N is an even number, the sequence set is a subset of a set composed of sequences generated from the second sequence by cyclic shifting $\alpha_k$, $\alpha_k + 1$, ..., $\alpha_k + \dfrac{N}{2} - 1$ separately.

When N is an odd number, the sequence set is a subset of a set composed of sequences generated from the second sequence by cyclic shifting $\alpha_k$, $\alpha_k + 1$, ..., $\alpha_k + \left\lceil \dfrac{N}{2} \right\rceil - 1$ separately.

Here, $\alpha_k$ is an integer greater than or equal to zero, and $\lceil \ \rceil$ denotes a ceiling function.

When N is an odd number, the K sequences satisfy at least one of the following conditions: different sequences are orthogonal to each other; Sequences having a length of N/2 composed of even elements of each of the K sequences are orthogonal to each other; and Sequences having a length of N/2 composed of odd elements of each of the K sequences are orthogonal to each other. When the second sequence is the Zadoff-Chu sequence, N may be 12, 24 or 36.

In step 102, a first modulation symbol is modulated at each of M positions of the first sequence, or the M positions of the first sequence are divided into G groups and a same modulation symbol is modulated in each of the G groups.

The first modulation symbol represents a modulated signal.

M is a positive integer less than N.

When the same modulation symbol is modulated in each of the G groups, the transmitting end divides the M positions of the first sequence into G groups and modulates the same modulation symbol in each group.

The modulation symbol represents a modulated signal, G is an integer equal to or greater than 2, and G is equal to or less than N.

In practical use, the M positions are predefined, that is, the user terminal implements the specific positions of the M positions.

In one embodiment, the M positions may be even-numbered points of the first sequence or odd-numbered points of the first sequence.

In practical use, when the M positions are even-numbered points of the first sequence, the M positions may specifically be a subset of all even-numbered points of the first sequence.

When the M positions are odd-numbered points of the first sequence, the M positions may specifically be a subset of all odd-numbered points of the first sequence.

In practical use, the signal may be an uplink control signal, such as an ACK or NACK message. Thus, the first modulation symbol may be modulated ACK or NACK message or data information. When a 1-bit ACK or NACK message is transmitted, the first modulation symbol is modulated at each of the M positions of the first sequence, wherein the first modulation symbol is an ACK or NACK message that has undergone BPSK modulation.

When a 2-bit ACK or NACK message is transmitted, the first modulation symbol is modulated at each of the M positions of the first sequence, wherein the first modulation symbol is an ACK or NACK message that has undergone QPSK modulation.

The uplink refers to a direction in which the user terminal transmits information to a base station. When a message greater than or equal to 2 bits is transmitted, the M positions of the first sequence are divided into G groups, and the same modulation symbol is modulated in the each of the G groups.

Specifically, when a 2-bit message is transmitted, the M positions of the first sequence are divided into three groups, and the same modulation symbol is modulated in each of the three groups. The three groups of modulation symbols are defined as $\{s_{G1}, s_{G2}, s_{G3}\}$. $s_{G1}$ denotes a modulation symbol of a first group. $s_{G2}$ denotes a modulation symbol of a second group. $s_{G3}$ denotes a modulation symbol of a third group.

A value of $\{s_{G1}, s_{G2}, s_{G3}\}$ is one of {1, 1, 1}, {j, -1, -j }, {-1, 1, -1} and {-j, -1, j}, or the value of $\{s_{G1}, s_{G2}, s_{G3}\}$ is one of {1, 1, 1}, {-1, -1, -1}, {j, j, j} and {-j, -j, -j}.

j denotes a unit imaginary number.

When N = 12 and M = 9, sequence points with indexes of {1, 5, 9} in the first sequence are set as the first group, sequence points with indexes of {2, 6, 10} in the first sequence are set as the second group, and sequence points with indexes of {3, 7, 11} in the first sequence are set as the third group.

In one embodiment, when a 1-bit message is transmitted, two first sequences are determined. The difference between cyclic shifts in the time domain of the two first sequences is N/2.

When a 2-bit message is transmitted, four first sequences are determined. The difference between cyclic shifts in the time domain of any two of the four first sequences is an integer multiple of N/4.

In one embodiment, the first modulation symbol carried by the first sequence is 1, or the modulation symbol of each of the G groups carried by the first sequence is 1.

When it is needed to simultaneously transmit the SR and one of the ACK message and the NACK message, that is, when the SR and ACK message are simultaneously transmitted or the SR and NACK message are simultaneously transmitted, the first sequence is a sequence corresponding to the SR, that is, an SR sequence.

Here, the SR sequence refers to a sequence that carries an SR.

In step 103, the first sequence carrying a corresponding modulation symbol is transmitted over a transmission symbol.

Specifically, the first sequence carrying the first modulation symbol or the first sequence carrying the modulation symbol of each of the G groups is mapped onto and transmitted over N consecutive subcarriers in a frequency domain; or the first sequence carrying the first modulation symbol or the first sequence carrying the modulation symbol of each of the G groups is mapped onto and transmitted over N evenly-spaced inconsecutive subcarriers in the frequency domain. The first sequence carrying the first modulation symbol or the first sequence carrying the modulation symbol of each of the G groups is mapped onto and transmitted over N evenly-spaced inconsecutive subcarriers in the frequency domain. This helps transmit a sounding reference signal (SRS) at an unmapped frequency-domain position (on a subcarrier).

In practical use, at least two transmission symbols are available.

Correspondingly, when at least two transmission symbols are available, the first sequence carrying the first modulation symbol is transmitted over each of the at least two transmission symbols separately.

Each transmission symbol corresponds to a different first sequence.

Each transmission symbol is mapped onto a different frequency-domain position, thus obtaining frequency division gains.

The first sequence or the frequency-domain position where the transmission symbol is mapped is different with respect to different transmitting ends, thus avoiding interference between different user terminals in a network cell.

In practical use, to reduce inter-cell interference, different first sequences may be used in different network cells, or cell-level scrambling may be performed when signal transmission is performed in different network cells.

When the first sequence carrying the first modulation symbol or the first sequence carrying the modulation symbol of each of the G groups is transmitted over the transmission symbol, the method further includes scrambling, at a cell level, the first sequence carrying the first modulation symbol or the first sequence carrying the modulation symbol of each of the G groups; and correspondingly, transmitting a scrambled first sequence carrying the first modulation symbol or a scrambled first sequence carrying the modulation symbol of each of the G groups over the transmission symbol.

Here, in practical use, the first sequence carrying the first modulation symbol or the first sequence carrying the modulation symbol of each of the G groups may be scrambled by using a cell-specific scrambling code sequence.

Correspondingly, a signal receiving method is further provided in this embodiment of the present disclosure. The method is applicable to the base station. As shown in FIG. 2, the method includes the steps described below.

In step 201, the first sequence carrying the first modulation symbol or the first sequence carrying the G groups of modulation symbols is received over the transmission symbol.

Specifically, the first sequence carrying the first modulation symbol or the first sequence carrying the G groups of modulation symbols is received over N consecutive subcarriers in a frequency domain; or the first sequence carrying the first modulation symbol or the first sequence carrying the G groups of modulation symbols is received over N evenly-spaced inconsecutive subcarriers in the frequency domain.

When mapped onto and transmitted over the N consecutive subcarriers in the frequency domain; the first sequence carrying the first modulation symbol or the first sequence carrying the G groups of modulation symbols is received over the N consecutive subcarriers in the frequency domain. When mapped onto and transmitted over the N evenly-spaced inconsecutive subcarriers in the frequency domain; the first sequence carrying the first modulation symbol or the first sequence carrying the G groups of modulation symbols is received over the N evenly-spaced inconsecutive subcarriers in the frequency domain.

In step 202, demodulation is performed using sequence points at the M positions of the first sequence carrying the first modulation symbol or the first sequence carrying the G groups of modulation symbols or non-coherent demodulation is performed using all sequence points so that the corresponding modulation symbol is obtained.

For steps 201 and 202, specifically, the receiving end receives the first sequence carrying the first modulation symbol over the transmission symbol. The first sequence carrying the first modulation symbol is obtained by modulating the first modulation symbol at each of the M positions of the first sequence having a length of N. Demodulation is performed using sequence points at the M positions of the first sequence carrying the first modulation symbol so that the first modulation symbol is obtained.

The receiving end receives the first sequence carrying the G groups of modulation symbols over the transmission symbol. The first sequence carrying the G groups of modulation symbols is obtained by dividing M positions of the first sequence having a length of N into the G groups and modulating the same modulation symbol in each of the G groups. Demodulation is performed using sequence points at the M positions of the first sequence carrying the G groups of modulation symbols so that the G groups of modulation symbols are obtained.

When the receiving end receives the first sequence carrying the first modulation symbol or the first sequence carrying the G groups of modulation symbols over the transmission symbol, non-coherent demodulation may be performed using all sequence points of the first sequence carrying the corresponding modulation symbol so that the corresponding modulation symbol is obtained. In practical use, the method further includes performing channel estimation using sequence points at positions other than the M positions in the first sequence carrying the first modulation symbol or the first sequence carrying the G groups of modulation symbols.

Here, after the first sequence carrying the first modulation symbol or the first sequence carrying the G groups of modulation symbols is scrambled at the cell level and before this step is performed, the method further includes that the first sequence carrying the first modulation symbol or the first sequence carrying the G groups of modulation symbols is descrambled at the cell level. Here, in practical use, the first sequence carrying the first modulation symbol or the first sequence carrying the G groups of modulation symbols may be descrambled by using a cell-specific scrambling code sequence.

In practical use, when the SR and the ACK message are simultaneously transmitted or the SR and the NACK message are simultaneously transmitted, demodulation is performed using the sequence points at the M positions of the SR sequence carrying the first modulation symbol or the SR sequence carrying the G groups of modulation symbols so that the corresponding modulation symbol is obtained.

It is to be noted that different transmitting ends (user terminals) correspond to different first sequences or transmission symbols for different transmitting ends are mapped onto different frequency-domain positions.

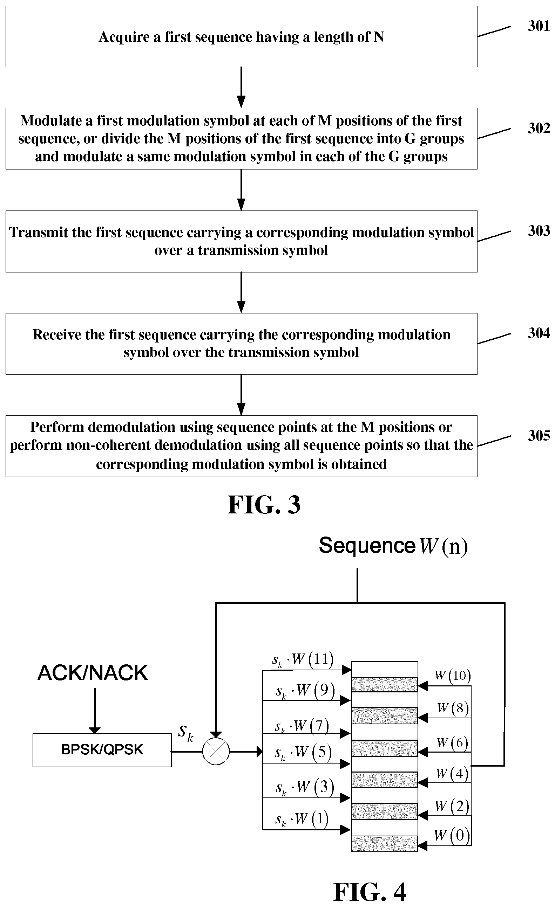

Correspondingly, a data transmission method is further provided in this embodiment of the present disclosure. As shown in FIG. 3, the method includes the steps described below.

In step 301, a transmitting end acquires a first sequence having a length of N.

N is a positive integer.

In step 302, the transmitting end modulates a first modulation symbol at each of M positions of the first sequence, or divides the M positions of the first sequence into G groups and modulates a same modulation symbol in each of the G groups.

The first modulation symbol represents a modulated signal. M is a positive integer less than N. The modulation symbol represents a modulated signal. G is an integer equal to or greater than 2, and G is equal to or less than N.

In step 303, the transmitting end transmits the first sequence carrying a corresponding modulation symbol over a transmission symbol.

In step 304, a receiving end receives the first sequence carrying the corresponding modulation symbol over the transmission symbol.

In step 305, the receiving end performs demodulation using sequence points at the M positions of the first sequence carrying the corresponding modulation symbol or performs non-coherent demodulation using all sequence points so that the corresponding modulation symbol is obtained. It is to be noted that the specific operational processes of the transmitting end and the receiving end have been detailed in detail above and will not be repeated here.

In the signal transmission method provided in the embodiment of the present disclosure, a transmitting end acquires a first sequence having a length of N, where N is a positive integer; and modulates a first modulation symbol at each of M positions of the first sequence, where the first modulation symbol represents a modulated signal, and M is a positive integer less than N; and transmits the first sequence carrying the first modulation symbol over a transmission symbol; or divides the M positions of the first sequence into G groups, and modulates a same modulation symbol in each of the G groups, where the modulation symbol represents a modulated signal, G is an integer equal to or greater than 2, and G is equal to or less than N; and transmits the first sequence carrying the modulation symbol of each of the G groups over the transmission symbol; and a receiving end receives the first sequence carrying a corresponding modulation symbol over the transmission symbol, performs demodulation using sequence points at the M positions of the first sequence carrying the corresponding modulation symbol or performs non-coherent demodulation using all sequence points of the first sequence carrying the corresponding modulation symbol so that the corresponding modulation symbol is obtained. Data (signal) modulation is performed using part of sequence points in the first sequence while reference signals are transmitted using other sequence points in the first sequence. In this way, it is possible to simultaneously transmit reference signals and data while maintaining a low peak-to-average ratio.

Additionally, in practical use, N may have a greater value so that inter-cell interference may be lower.

Moreover, when it is needed to simultaneously transmit the SR and one of the ACK message and the NACK message, that is, when the SR and ACK message are simultaneously transmitted or the SR and NACK message are simultaneously transmitted, the first sequence is a sequence corresponding to the SR, that is, an SR sequence. In this way, multiplexing of the ACK/NACK message and the SR can be achieved.

Embodiment two

On the basis of embodiment one, the manner in which a reference signal and data are transmitted is described in detail in this embodiment.

FIG. 4 is a schematic diagram illustrating that a user terminal modulates, on one symbol, data (that is, control information) in odd-numbered points of a predefined sequence having a length of N(N = 12).

As can be seen from FIG. 4, after the ACK/NACK message (control information) is BPSK or QPSK modulated, the modulated ACK/NACK message $S_k$ is obtained. Then, $S_k$ is multiplied with the odd-numbered points of a predefined sequence $W$(n). That is, $S_k$ is modulated in each odd-numbered point of the predefined sequence $W$(n). The remaining sequence points remain unchanged. That is, the sequence points in even-numbered points remain unchanged. Then the sequence is mapped onto and transmitted over 12 consecutive subcarriers in the frequency domain.

$W$(n) is a QPSK machine selected sequence having a length of N (N = 12).

Here, the QPSK machine selected sequence may be expressed as $W(n) = e^{\frac{j\varphi(n)\pi}{4}}$ in the frequency domain. $0 \leq n < N$. The value of $\varphi(n)$ may be 1, -1, 3 or -3. $\varphi(n)$ of different basic sequences has different values.

For a determined basic sequence, that is, a determined value of $\varphi(n)$, the phase deflection sequence in the frequency domain may be expressed as $W^{(\alpha)}(n) = e^{\frac{j\varphi(n)\pi}{4}} e^{\frac{j2\pi\alpha n}{N}}$. $e^{\frac{j2\pi\alpha n}{N}}$ represents the phase rotation amount. $\alpha$ may be defined as the cyclic shifts in the time domain.

Assuming that the determined values of $\varphi(n)$ are [-1, 1, 3, -3, 3, 3, 1, 1, 3, 1, -3, 3], the corresponding basic sequence in the frequency domain and the phase deflection sequences obtained by five different cyclic shifts are as shown in Table 1.

Table 1

| Basic Sequence (Cyclic shifts: 0) | Cyclic shifts: 1 | Cyclic shifts: 2 | Cyclic shifts: 3 | Cyclic shifts: 4 | Cyclic shifts: 5 |
|---|---|---|---|---|---|
| 0.7071 - 0.7071i | 0.7071 - 0.7071i | 0.7071 - 0.7071i | 0.7071 - 0.7071i | 0.7071 - 0.7071i | 0.7071 - 0.7071i |
| 0.7071 + 0.7071i | 0.2588 + 0.9659i | -0.2588 + 0.9659i | -0.7071 + 0.7071i | -0.9659 + 0.2588i | -0.9659 - 0.2588i |
| -0.7071 + 0.7071i | -0.9659 - 0.2588i | -0.2588 - 0.9659i | 0.7071 - 0.7071i | 0.9659 + 0.2588i | 0.2588 + 0.9659i |
| -0.7071 - 0.7071i | 0.7071 - 0.7071i | 0.7071 + 0.7071i | 0.7071 + 0.7071i | -0.7071 - 0.7071i | 0.7071 - 0.7071i |
| -0.7071 + 0.7071i | -0.2588 - 0.9659i | 0.9659 + 0.2588i | -0.7071 + 0.7071i | -0.2588 - 0.9659i | 0.9659 + 0.2588i |
| -0.7071 + 0.7071i | 0.2588 - 0.9659i | 0.2588 + 0.9659i | -0.7071 - 0.7071i | 0.9659 + 0.2588i | -0.9659 + 0.2588i |
| 0.7071 + 0.7071i | -0.7071 - 0.7071i | 0.7071 + 0.7071i | -0.7071 - 0.7071i | 0.7071 + 0.7071i | -0.7071 - 0.7071i |
| 0.7071 + 0.7071i | -0.2588 - 0.9659i | -0.2588 + 0.9659i | 0.7071 - 0.7071i | -0.9659 + 0.2588i | 0.9659 + 0.2588i |
| -0.7071 + 0.7071i | 0.9659 + 0.2588i | -0.2588 - 0.9659i | -0.7071 + 0.7071i | 0.9659 + 0.2588i | -0.2588 - 0.9659i |
| 0.7071 + 0.7071i | 0.7071 - 0.7071i | -0.7071 - 0.7071i | -0.7071 + 0.7071i | 0.7071 + 0.7071i | 0.7071 - 0.7071i |
| -0.7071 - 0.7071i | -0.9659 + 0.2588i | -0.2588 + 0.9659i | 0.7071 + 0.7071i | 0.9659 - 0.2588i | 0.2588 - 0.9659i |
| -0.7071 + 0.7071i | -0.2588 + 0.9659i | 0.2588 + 0.9659i | 0.7071 + 0.7071i | 0.9659 + 0.2588i | 0.9659 - 0.2588i |

In practical use, any $\frac{N}{2}$ sequences generated by cyclic shifting of a sequence by cyclic shifts $\alpha_k$, $\alpha_k$ + 1, ..., $\alpha_k + \frac{N}{2} - 1$ separately may be selected to form a predefined sequence set. For example, assuming that $\alpha_k$ = 0, then

the 6 columns in Table 1 may be selected as the QPSK machine selected sequences of different user terminals, that is, the predefined sequences.

In this case, the selected sequences can satisfy at least one of the following conditions: the predefined sequences of different user terminals are orthogonal to each other; 6-long sequences composed of even-numbered points of the predefined sequences of different user terminals are orthogonal to each other; and 6-long sequences composed of odd-numbered points of the predefined sequences of different user terminals are orthogonal to each other.

After the predefined sequence is delivered, the receiving end may perform channel estimation according to the local sequence by using the even-numbered points (which represent reference signals) in the sequence and then demodulate the valid data in the odd-numbered bits. Different predefined sequences are used to distinguish between different user terminals.

Embodiment three

On the basis of embodiment one, the manner in which a reference signal and data are transmitted is described in detail in this embodiment.

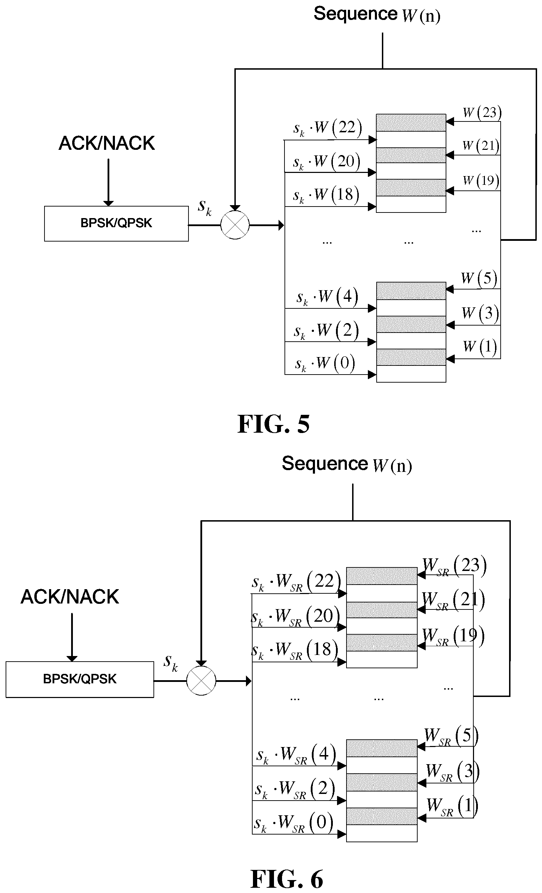

FIG. 5 is a schematic diagram illustrating that a user terminal modulates, on one symbol, data in even-numbered points of a predefined Zadoff-Chu sequence having a length of N (N =24).

As can be seen from FIG. 5, after the ACK/NACK message (control information) is BPSK or QPSK modulated, the modulated ACK/NACK message $S_k$ is obtained. Then, $S_k$ is multiplied with the even-numbered points of a predefined sequence $W$(n). That is, $W$(n) is modulated in each even bit of the predefined sequence $S_k$. The remaining sequence points remain unchanged. That is, the sequence points in odd-numbered points remain unchanged. Then the ACK/NACK message is mapped onto and transmitted over 24 consecutive subcarriers in the frequency domain.

$W$(n) is a Zadoff-Chu sequence having a length of N (N = 24).

Here, the Zadoff-Chu sequence may be expressed as $W(n) = \mathrm{e}^{\frac{-jq\pi n^2}{N}}$ in the frequency domain.

$0 \le n \le N$. q is a basic sequence index and is relatively prime to the length N.

For a determined basic sequence, that is, a determined value of q, the phase deflection sequence in the frequency domain may be expressed as $W^{(\alpha)}(n) = \mathrm{e}^{\frac{-jq\pi n^2}{N}} e^{\frac{j2\pi\alpha n}{N}}$. $e^{\frac{j2\pi\alpha n}{N}}$ represents the phase rotation amount. $\alpha$ may be defined as the cyclic shifting amount in the time domain.

In practical use, any $\dfrac{N}{2}$ sequences generated by cyclic shifting of a sequence by cyclic shifts $\alpha_k$, $\alpha_k + 1$, ..., $\alpha_k + \dfrac{N}{2} - 1$ separately may be selected to form a predefined sequence set. For example, if $\alpha_k$ = 12, sequences generated by cyclic shifting of a sequence by cyclic shifts 12, 13, ..., 23 separately may be selected to form the predefined sequence.

In this case, the selected predefined sequences satisfy at least one of the following conditions: the predefined sequences of different user terminals are orthogonal to each other; 12-long sequences composed of even-numbered points of the predefined sequences of different user terminals are orthogonal to each other; and 12-long sequences composed of odd-numbered points of the predefined sequences of different user terminals are orthogonal to each other.

Additionally, a good peak-to-average ratio is maintained in the time domain after row control information is superimposed at the predetermined position of the predefined sequence.

After the predefined sequence is delivered, the receiving end may perform channel estimation according to the local sequence by using the odd-numbered points (which represent reference signals) in the sequence and then demodulate the valid data in the even-numbered bits. Different predefined sequences are used to distinguish between different user terminals.

Embodiment four

On the basis of embodiment one and embodiment three, a predefined sequence is described in detail in this embodiment.

In this embodiment, the length N of the predefined sequence is greater than 24.

It is to be noted that the predefined sequence may be generated through the ZC sequence having an even-numbered length as described in embodiment three, obtained by truncation of the ZC sequence having an odd-numbered length or generated by cyclic extension of the ZC sequence having an odd-numbered length.

Here, the ZC sequence having an odd-numbered length may be expressed as $W(n) = e^{\frac{-jq\pi n(n+1)}{M}}$ in the frequency domain. $0 \le n < X$. q is a basic sequence index and is relatively prime to the length X.

For a determined basic sequence, that is, a determined value of q, the phase deflection sequence in the frequency domain may be expressed as $W^{(\alpha)}(n) = e^{\frac{-jq\pi n^2}{M}} e^{\frac{j2\pi\alpha n}{N}}$. $e^{\frac{j2\pi\alpha n}{N}}$ is the phase deflection amount. $\alpha$ may be defined as the cyclic shifting amount in the time domain.

For example, when N = 36, the predefined sequence may be generated through the ZC sequence having a length of X = 31 (X).

In practical use, any $\dfrac{N}{2}$ sequences generated by cyclic shifting of a sequence by cyclic shifts $\alpha_k$, $\alpha_k$ + 1, ..., $\alpha_k + \dfrac{N}{2} - 1$ separately may be selected to form a predefined sequence set. For example, if $\alpha_k$ = 6, sequences generated by cyclic shifting of a sequence by cyclic shifts 6, 7, ..., 23 separately may be selected to form the predefined sequence.

In this case, the 18 predefined sequences satisfy at least one of the following conditions: the predefined sequences of different user terminals are orthogonal to each other; 18-long sequences composed of even-numbered points of the predefined sequences of different user terminals are orthogonal to each other; and 18-long sequences composed of odd-numbered points of the predefined sequences of different user terminals are orthogonal to each other.

Embodiment five

On the basis of embodiment one, the manner in which a reference signal and data are transmitted is described in detail in this embodiment.

FIG. 6 is a schematic diagram illustrating that a user terminal transmits an SR and an ACK message simultaneously on one symbol.

It is assumed that $W$(n) is a predefined sequence assigned to the user terminal so as to be used for transmitting the ACK/NACK message, and $W_{SR}$(n) is a predefined sequence assigned to the user terminal so as to be used for transmitting the SR.

Each od $W$(n) and $W_{SR}$(n) is a QPSK machine selected sequence having a length of N (N = 24).

When the SR and the ACK/NACK message are simultaneously transmitted, the predefined sequence for transmitting the ACK/NACK message is defined as $W_{SR}$(n). $W_{SR}$(n) carries the SR.

As can be seen from FIG. 6, after the ACK/NACK message (control information) is BPSK or QPSK modulated, the modulated ACK/NACK message $S_k$ is obtained. Then, $S_k$ is multiplied with the even-numbered points of a predefined sequence $W_{SR}$(n). That is, $S_k$ is modulated in each even bit of the predefined sequence $W_{SR}$(n). The remaining sequence points remain unchanged. That is, the sequence points in odd-numbered points remain unchanged. Then the ACK/NACK message is mapped onto and transmitted over 24 consecutive subcarriers in the frequency domain.

Here, the QPSK machine selected sequence for transmitting the ACK/NACK message may be expressed as $W_{SR}(n) = e^{\frac{j\varphi(n)\pi}{4}}$ in the frequency domain. $0 \le n \le N$. The value of $\varphi(n)$ may be 1, -1, 3 or -3. $\varphi(n)$ of different basic sequences has different values.

For a determined basic sequence, that is, a determined value of $\varphi(n)$, the phase deflection sequence in the frequency domain may be expressed as $W_{SR}^{(\alpha)}(n) = e^{\frac{j\varphi(n)\pi}{4}} e^{\frac{j2\pi\alpha n}{N}}$. $e^{\frac{j2\pi\alpha n}{N}}$ represents the phase rotation amount. $\varphi(n)$ may be defined as the cyclic shifting amount in the time domain.

After the predefined sequence is delivered, the receiving end may detect the SR and ACK/NACK message separately according to the local sequence (demodulate the valid data in the even-numbered bits). Different predefined sequences are used to distinguish between different user terminals. Of course, the receiving end may perform channel estimation by using the odd-numbered points (which represent reference signals) in the sequence.

Embodiment six

On the basis of embodiment one, the manner in which a reference signal and data are transmitted is described in detail in this embodiment.

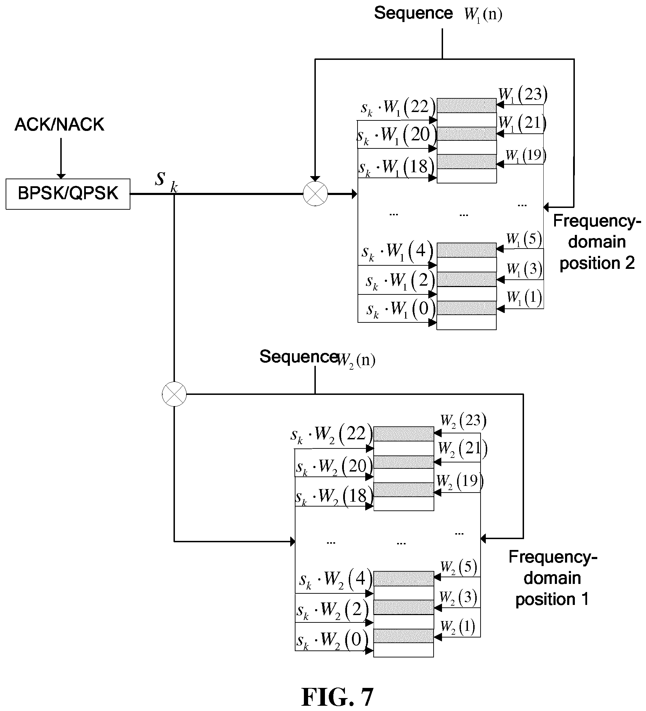

FIG. 7 is a schematic diagram illustrating that a user terminal modulates, on two symbols, data in even-numbered points of a predefined Zadoff-Chu sequence having a length of N (N =24).

As can be seen from FIG. 7, after the ACK/NACK message (control information) is BPSK or QPSK modulated, the modulated ACK/NACK message $S_k$ is obtained. Then, $S_k$ is multiplied with the even-numbered points of predefined sequences $W_1(n)$ and $W_2(n)$. That is, $S_k$ is modulated in each even bit of the predefined sequence $W_1(n)$ and $W_2(n)$. The remaining sequence points remain unchanged. That is, the sequence points in odd-numbered points remain unchanged. Then the ACK/NACK message is mapped onto and transmitted over 24 consecutive subcarriers in the frequency domain.

Each of $W_1(n)$ and $W_2(n)$ is a Zadoff-Chu sequence having a length of N (N = 24).

Here, the subcarriers on which each symbol is mapped are at different frequency-domain positions, facilitating obtaining frequency division gains.

After the predefined sequence is delivered, the receiving end may perform channel estimation according to the local sequence by using the odd-numbered subcarriers (which represent reference signals) on each symbol and then demodulate the valid data in the even-numbered bits. Different predefined sequences are used to distinguish between different user terminals.

In practical use, two symbols may be two independent symbols or may be two symbols obtained from one symbol that is split. The splitting refers to that a shorter time-domain symbol is obtained using a larger subcarrier spacing.

Embodiment seven

On the basis of embodiment one, the manner in which a reference signal and data are transmitted is described in detail in this embodiment.

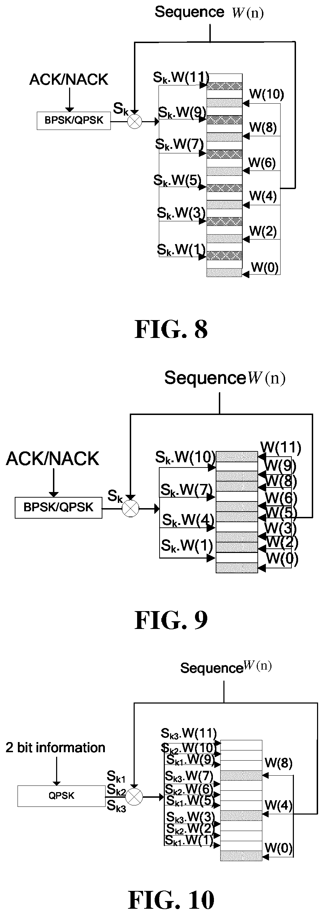

FIG. 8 is a schematic diagram illustrating that a user terminal maps, on one symbol, a predefined sequence onto evenly-spaced subcarriers in a frequency domain.

Assuming that $W(n)$ is a QPSK machine selected sequence having a length of N (N = 12), indicating the predefined sequence assigned to the user terminal so as to be used for transmitting the ACK/NACK message.

As can be seen from FIG. 8, after the ACK/NACK message (control information) is BPSK or QPSK modulated, the modulated ACK/NACK message $S_k$ is obtained. Then, $S_k$ is multiplied with the odd-numbered points of a predefined sequence $W(n)$. That is, $S_k$ is modulated in each odd-numbered point of the predefined sequence $W(n)$. The remaining sequence points remain unchanged. That is, the sequence points in even-numbered points remain unchanged. Then the ACK/NACK message is mapped onto and transmitted over 12 consecutive subcarriers in the frequency domain. This mapping structure facilitates the transmission of SRS at unmapped frequency-domain positions.

Embodiment eight

On the basis of embodiment one, the manner in which a reference signal and data are transmitted is described in detail in this embodiment.

FIG. 9 is a schematic diagram illustrating that a user terminal modulates, on one symbol, data (that is, control information) in four predefined positions of a predefined sequence having a length of N (N = 12).

It is assumed that the four predetermined positions are the first, fourth, seventh and ten sequence points of the predefined sequence.

As can be seen from FIG. 9, after the ACK/NACK message (control information) is BPSK or QPSK modulated, the modulated ACK/NACK message $S_k$ is obtained. Then, $S_k$ is multiplied at the first, fourth, seventh and ten sequence points of a predefined sequence $W(n)$. That is, $S_k$ is modulated in each of the first, fourth, seventh and ten sequence points of the predefined sequence $W(n)$. The remaining sequence points remain unchanged. Then the ACK/NACK message is mapped onto and transmitted over 12 consecutive subcarriers in the frequency domain.

$W(n)$ is a QPSK machine selected sequence having a length of N (N = 12).

Then, at the receiving end, it is possible to perform channel estimation according to the local sequence by using sequence point positions 0, 2, 3, 5, 6, 8, 9 and 11 and then demodulate the demodulation data at the first, fourth, seventh and ten sequence points. Different predefined sequences are used to distinguish between different user terminals. Sequences composed of the first, fourth, seventh and tenth sequence points of the predefined sequences of different sequences are orthogonal to each other. Sequences composed of the zeroth, second, third, fifth, sixth, eighth, ninth and eleventh sequence points of the predefined sequences of different sequences are orthogonal to each other.

Embodiment nine

FIG. 10 is a schematic diagram illustrating that a user terminal modulates, on one symbol, data at three groups of positions of a predefined sequence according to embodiment nine of the present disclosure. In the figure, the sequence length is N = 12, the number of bits for transmitting information is 2, and the modulation method used is QPSK.

In FIG. 10, the sequence points are divided into three groups: {1, 5, 9}, {2, 6, 10} and {3, 7, 11}. The same modulation symbol is modulated in each group.

The three groups {1, 5, 9}, {2, 6, 10} and {3, 7, 11} correspond to $s_{k1}$, $s_{k2}$ and $s_{k3}$ respectively.

The set $\{s_{k1}, s_{k2}, s_{k3}\}$ is defined, and the value of the set is determined according to the four possibilities of the 2-bit information, namely 00, 01, 10 and 11. $\{s_{k1}, s_{k2}, s_{k3}\}$ is one of {1, 1, 1}, {j, -1, -j }, {-1, 1, -1} and {-j, -1, j}. For example, when 00 is transmitted, $\{s_{k1}, s_{k2}, s_{k3}\}$ is {1, 1, 1}.

Different user terminals use different cyclic shifting sequences of the same basic sequence. Preferably, the cyclic shifts of different user terminals differ by A. A mod 3 is 1 or 2. In this case, the sequences of different user terminals, each of which is composed of sequence points {1, 2, 3, 5, 6, 7, 9, 10, 11}, are orthogonal to each other, and sequences composed of {0, 4, 8} are orthogonal to each other.

At the receiving end, decoupling can be performed using coherent detection. Specifically, channel estimation is performed using the positions of the sequence points 0, 4 and 8 in the figure, and then the three groups of sequence points are demodulated. Alternatively, since the sequences used by different user terminals are orthogonal to each other, and are still orthogonal to each other after the modulation symbol is modulated, the receiving-end user may perform determination according to the non-coherent detection by using the peak value.

Further, the receiving end may select the receiving end detection method according to the channel condition. For example, coherent detection is performed in the case of a high signal-to-noise ratio, non-coherent detection is performed in the case of a low signal-to-noise ratio, or coherent detection and non-coherent detection are jointly performed.

Embodiment ten

In this embodiment, provided is a transmission method for the case where the base station predefines multiple first sequences for each user terminal. When 1-bit information, for example, 1-bit ACK/NACK information, is transmitted, the base station defines two predefined sequences for the user terminal. The predefined sequences satisfy a difference of N/2 between the time-domain cyclic shifts. In this case, the number of users that can multiplex the same frequency-domain resource position and transmit 1-bit information is N/2. For example, when N = 12, sequence combination pairs (0, 6), (1, 7), (2, 8), (3, 9), (4, 10) and (5, 11) are defined, different user terminals select different sequence pairs, and a certain user terminal uses one of the sequence pairs to transmit ACK or NACK.

It is to be noted that the values in the preceding parentheses are the time-domain cyclic shifts based on a certain sequence.

When 2-bit information is transmitted, the base station defines four first sequences for the user terminal, and the time-domain cyclic shifts of any two of the four sequences differ by an integer multiple of N/4. For example, when N = 12, sequence combination pairs (0, 3, 6, 9), (1, 4, 7, 10) and (2, 5, 8, 11) are defined, different user terminals select different sequence pairs, and a certain user terminal uses one of the sequence pairs to perform transmission according to the transmitted 2-bit information.

When multiple first predefined sequences are determined in this embodiment, the receiving-end user may perform determination according to the non-coherent detection by using the peak value, or implement coherent detection by performing channel estimation of part of the sequence point positions.

Preferably, when multiple first sequences are defined, the first modulation symbol or each symbol among the G groups of modulation symbols in this embodiment of the present disclosure is 1.

Embodiment eleven

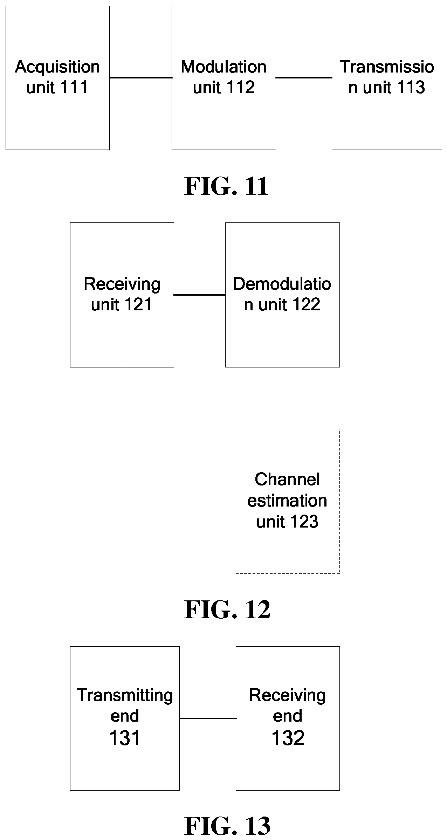

To implement the method of the embodiment of the present disclosure, a signal transmission device is provided in this embodiment. The device may be disposed in a user terminal. As shown in FIG. 11, the device includes an acquisition unit 111, configured to acquire a first sequence having a length of N, where N is a positive integer; a modulation unit 112, configured to modulate a first modulation symbol at each of M positions of the first sequence, or to divide the M positions of the first sequence into G groups and modulate a same modulation symbol in each of the G groups, where the first modulation symbol represents a modulated signal, the modulation symbol represents a modulated signal, M is a positive integer less than N, G is an integer equal to or greater than 2, and G is equal to or less than N; and a transmission unit 113, configured to transmit the first sequence carrying the first modulation symbol or the first sequence carrying the modulation symbol of each of the G groups over the transmission symbol.

The acquisition unit 111 is specifically configured to: when an SR and an ACK message are simultaneously transmitted or the SR and a NACK message are simultaneously transmitted, the sequence corresponding to the SR is used as the first sequence, that is, an SR sequence is used as the first sequence.

The transmission unit 113 is specifically configured to make the first sequence carrying the first modulation symbol or the first sequence carrying the modulation symbol of each of the G groups mapped onto and transmitted over N consecutive subcarriers in a frequency domain; or make the first sequence carrying the first modulation symbol or the first sequence carrying the modulation symbol of each of the G groups mapped onto and transmitted over N evenly-spaced inconsecutive subcarriers in the frequency domain.

In one embodiment, the apparatus further includes a scrambling unit, configured to scramble, at a cell level, the first sequence carrying the first modulation symbol or the first sequence carrying the modulation symbol of each of the G groups; and correspondingly, the transmission unit is configured to transmit a scrambled first sequence carrying the first modulation symbol or a scrambled first sequence carrying the modulation symbol of each of the G groups over the transmission symbol.

In practical use, the acquisition unit 111, the modulation unit 112 and the scrambling unit may be implemented by a processor (for example, a Central Processing Unit (CPU) or a Micro Control Unit (MCU)) or a Field-Programmable Gate Array (FPGA) in the signal transmission device; and the transmission unit 113 may be implemented by a transceiver in the signal transmission device. To implement the method of the embodiment of the present disclosure, a signal receiving device is further provided in this embodiment. The apparatus may be disposed on a base station. As shown in FIG. 12, the device includes a receiving unit 121, configured to receive a first sequence carrying a first modulation symbol over a transmission symbol, where the first sequence carrying the first modulation symbol is obtained by modulating the first modulation symbol at each of M positions of the first sequence having a length of N, and N is a positive integer; and a demodulation unit 122, configured to perform demodulation using sequence points at the M positions of the first sequence carrying the first modulation symbol so that the first modulation symbol is obtained, where the first modulation symbol represents a modulated signal, and M is a positive integer less than N; or the receiving unit 121, configured to receive a first sequence carrying G groups of modulation symbols over the transmission symbol, where the first sequence carrying the G groups of modulation symbols is obtained by dividing the M positions of the first sequence having a length of N into G groups and modulating a same modulation symbol in each of the G groups, N is a positive integer, G is an integer equal to or greater than 2, G is equal to or less than N, and the modulation symbol represents a modulated signal; and the demodulation unit 122, configured to perform demodulation using sequence points at the M positions of the first sequence carrying the G groups of modulation symbols so that the G groups of modulation symbols are obtained, where M is a positive integer less than N; or the receiving unit 121, configured to receive the first sequence carrying the first modulation symbol or the first sequence carrying the G groups of modulation symbols over the transmission symbol, where the first sequence carrying the first modulation symbol is obtained by modulating the first modulation symbol at the each of the M positions of the first sequence having a length of N, dividing the M positions of the first sequence having a length of N into the G groups and modulating the same modulation symbol in the each of the G groups, N is a positive integer, M is a positive integer less than N, G is an integer equal to or greater than 2, and G is equal to or less than N; and the demodulation unit 122, configured to perform non-coherent demodulation using all sequence points of the first sequence carrying a corresponding modulation symbol so that the corresponding modulation symbol is obtained.

The device may further include a channel estimation unit 123, configured to perform channel estimation using sequence points at positions other than the M positions in the first sequence carrying the first modulation symbol or the first sequence carrying the G groups of modulation symbols.

The demodulation unit 122 is specifically configured to: when the SR and the ACK message are simultaneously transmitted or the SR and the NACK message are simultaneously transmitted, demodulation is performed using the sequence points at the M positions of the SR sequence carrying the first modulation symbol or the SR sequence carrying the G groups of modulation symbols so that the first modulation symbol is obtained.

The receiving unit 121 is specifically configured to receive the first sequence carrying the first modulation symbol or the first sequence carrying the G groups of modulation symbols over N consecutive subcarriers in a frequency domain; or receive the first sequence carrying the first modulation symbol or the first sequence carrying the G groups of modulation symbols over N evenly-spaced inconsecutive subcarriers in the frequency domain.

In one embodiment, the apparatus may further include a descrambling unit, configured to descramble, at a cell level, the first sequence carrying the first modulation symbol or the first sequence carrying the G groups of modulation symbols.

In practical use, the receiving unit 121 may be implemented by a transceiver in the signal receiving device; and the demodulation unit 122, the channel estimation unit 123 and the descrambling unit may be implemented by a processor (for example, a CPU, an MCU, a DSP or an FPGA) in the signal receiving device.

Correspondingly, to implement the method of the embodiment of the present disclosure, a signal transmission system is further provided in this embodiment. As shown in FIG. 13, the system includes a transmitting end 131, configured to acquire a first sequence having a length of N, where N is a positive integer and to modulate a first modulation symbol at each of M positions of the first sequence; or configured to divide the M positions of the first sequence into G groups and modulate a same modulation symbol in each of the G groups, where a corresponding modulation symbol represents a modulated signal, M is a positive integer less than N, G is an integer equal to or greater than 2, and G is equal to or less than N, and to transmit the first sequence carrying the corresponding modulation symbol over the transmission symbol; and a receiving end 132, configured to receive the first sequence carrying the corresponding modulation symbol over the transmission symbol and to perform demodulation using sequence points at the M positions of the first sequence carrying the corresponding modulation symbol or perform non-coherent demodulation using all sequence points of the first sequence carrying the corresponding modulation symbol so that the corresponding modulation symbol is obtained.

In practical use, the transmitting end 131 may be a user terminal, and correspondingly, the receiving end 132 may be a base station.

It is to be noted that the specific functions of the transmitting end 131 and the receiving end 132 have been described in detail above and will not be repeated here.

It is to be understood by those skilled in the art that embodiments of the present disclosure may be provided as a method, a system or a computer program product. Therefore, the present disclosure may take the form of a hardware embodiment, a software embodiment, or an embodiment combining software and hardware. The present disclosure may take the form of a computer program product implemented in one or more computer-usable storage media (including, but not limited to, a disk memory and an optical memory) that includes computer-usable program codes.

The present disclosure is described with reference to flowcharts and/or block diagrams of the method, apparatus (system) and computer program product according to embodiments of the present disclosure. It is to be understood that the computer program instructions can be used to implement each flow and/or block in the flowcharts and/or block diagrams and a combination of flows and/or blocks in the flowcharts and/or block diagrams. These computer program instructions can be provided to a processor of a general purpose computer, special purpose computer, embedded processor, or another programmable data processing device to produce a machine, so as to enable instructions executed by a processor of a computer or another programmable data processing device to generate an apparatus for implementing the functions specified in one or more flows in the flowcharts and/or one or more blocks in the block diagrams. These computer program instructions can also be stored in a computer-readable memory that can direct a computer or another programmable data processing device to operate in a particular manner, so that the instructions stored in the computer-readable memory produce an article of manufacture including an instruction apparatus. The instruction apparatus implements the functions specified in one or more flows in the flowcharts and/or one or more blocks in the block diagrams.

These computer program instructions can also be loaded onto a computer or another programmable data processing device, so that a series of operating steps are performed on a computer or another programmable device, and the instructions executed on the computer or another programmable device provide steps for implementing the functions specified in one or more flows in the flowcharts and/or one or more blocks in the block diagrams.

On this basis, a computer-readable storage medium is further provided in embodiments of the present disclosure. The storage medium is configured to store computer programs for implementing steps of any one of the signal transmission methods described above or steps of any one of the signal receiving methods described above when the computer programs are executed by a processor.

The preceding are only preferred embodiments of the present disclosure and are not intended to limit the scope of the present disclosure.

**Claims**

1. A signal transmission method, comprising:

   acquiring (101) a first sequence having a length of N, wherein N is a positive integer; multiplying (102) a first modulation symbol at each of M positions of the first sequence, wherein the first modulation symbol represents a modulated signal, and M is a positive integer less than N, and wherein the M positions are even-numbered point positions of the first sequence or odd-numbered point positions of the first sequence; and transmitting (103) the first sequence carrying the first modulation symbol over a transmission symbol; wherein the first modulation symbol is modulated acknowledgement, ACK, modulated non-acknowledgement, NACK message, or modulated data information; wherein when a 1-bit ACK or NACK message is transmitted, the first modulation symbol is multiplied at each of the M positions of the first sequence; and wherein the first modulation symbol is the ACK or NACK message that has undergone binary phase shift keying modulation.

2. The method of claim 1, wherein the first sequence is obtained from a second sequence through different phase rotations in a frequency domain, and/or through different cyclic shifts in a time domain wherein

an amplitude of the second sequence is a non-zero constant, and a length of the second sequence is N.

3. The method of claim 2, wherein when a 1-bit message is transmitted, two first sequences are acquired, wherein the difference between cyclic shifts in the time-domain of the two first sequences is N/2;
wherein when a 2-bit message is transmitted, four first sequences are acquired, wherein the difference between cyclic shifts in the time-domain of any two of the four first sequences is an integer multiple of N/4.

4. A signal receiving method, comprising:
receiving (201) a first sequence carrying a first modulation symbol over a transmission symbol, wherein the first sequence carrying the first modulation symbol is obtained by multiplying the first modulation symbol at each of M positions of the first sequence having a length of N, N is a positive integer, and M is a positive integer less than N, and wherein the M positions are even-numbered point positions of the first sequence or odd-numbered point positions of the first sequence; and performing demodulation (202) using sequence points at the M positions of the first sequence carrying the first modulation symbol so that the first modulation symbol is obtained, or performing non-coherent demodulation (202) using all sequence points of the first sequence carrying the first modulation symbol so that the first modulation symbol is obtained, wherein the first modulation symbol represents a modulated signal; wherein the first modulation symbol is modulated acknowledgement, ACK, modulated non-acknowledgement, NACK message, or modulated data information; wherein when a 1-bit ACK or NACK message is transmitted, the first modulation symbol is multiplied at each of the M positions of the first sequence; and wherein the first modulation symbol is the ACK or NACK message that has undergone binary phase shift keying modulation.

5. A signal transmission device, comprising:

an acquisition unit (111), configured to acquire a first sequence having a length of N, wherein N is a positive integer;
a modulation unit (1112), configured to:
multiply a first modulation symbol at each of M positions of the first sequence, wherein the first modulation symbol represents a modulated signal, and M is a positive integer less than N, and wherein the M positions are even-numbered point positions of the first sequence or odd-numbered point positions of the first sequence; wherein the first modulation symbol is modulated acknowledgement, ACK, modulated non-acknowledgement, NACK message, or modulated data information; wherein when a 1-bit ACK or NACK message is transmitted, the first modulation symbol is multiplied at each of the M positions of the first sequence; and wherein the first modulation symbol is the ACK or NACK message that has undergone binary phase shift keying modulation; and
a transmission unit (113), configured to transmit the first sequence carrying the first modulation symbol.

6. The device of claim 5, further comprising:

a scrambling unit, configured to scramble, at a cell level, the first sequence carrying the first modulation symbol; and
the transmission unit (113) is configured to transmit a scrambled first sequence carrying the first modulation symbol.

7. A signal receiving device, comprising:
a receiving unit (121), configured to receive a first sequence carrying a first modulation symbol over a transmission symbol, wherein the first sequence carrying the first modulation symbol is obtained by multiplying the first modulation symbol at each of M positions of the first sequence having a length of N, N is a positive integer, and M is a positive integer less than N, and wherein the M positions are even-numbered point positions of the first sequence or odd-numbered point positions of the first sequence; and a demodulation unit (122), configured to perform demodulation using sequence points at the M positions of the first sequence carrying the first modulation symbol so that the first modulation symbol is obtained, or to perform non-coherent demodulation using all sequence points of the first sequence carrying the first modulation symbol so that the first modulation symbol is obtained, wherein the first modulation symbol represents a modulated signal; wherein the first modulation symbol is modulated acknowledgement, ACK, modulated non-acknowledgement, NACK message, or modulated data information; wherein when a 1-bit ACK or NACK message is transmitted, the first modulation symbol is multiplied at each of the M positions of the first sequence; and wherein the first modulation symbol is the ACK or NACK message that has undergone binary phase shift keying modulation.

8. The device of claim 7, further comprising:

a channel estimation unit (123), configured to perform channel estimation using sequence points at positions other than the M positions in the first sequence carrying the first modulation symbol.

9. The device of claim 7, further comprising:
a descrambling unit, configured to descramble, at a cell level, the first sequence carrying the first modulation symbol.

**Patentansprüche**

1. Signalübertragungsverfahren, umfassend:

Erfassen (101) einer ersten Sequenz mit einer Länge von N, wobei N eine positive ganze Zahl ist; Multiplizieren (102) eines ersten Modulationssymbols an jeder von M Positionen der ersten Sequenz, wobei das erste Modulationssymbol ein moduliertes Signal darstellt und M eine positive ganze Zahl kleiner als N ist, und wobei die M Positionen geradzahlige Punktpositionen der ersten Sequenz oder ungeradzahlige Punktpositionen der ersten Sequenz sind; und Übertragen (103) der ersten Sequenz, die das erste Modulationssymbol trägt, über ein Übertragungssymbol;
wobei das erste Modulationssymbol eine modulierte Bestätigung, ACK-, eine modulierte Nichtbestätigung, NACK-Nachricht, oder eine modulierte Dateninformation ist; wobei, wenn eine 1-Bit-ACK- oder NACK-Nachricht übertragen wird, das erste Modulationssymbol an jeder der M Positionen der ersten Sequenz multipliziert wird; und wobei das erste Modulationssymbol die ACK- oder NACK-Nachricht ist, die einer binären Phasenumtastungsmodulation unterzogen wurde.

2. Verfahren nach Anspruch 1, wobei die erste Sequenz aus einer zweiten Sequenz durch unterschiedliche Phasenrotationen in einem Frequenzbereich und/oder durch unterschiedliche zyklische Verschiebungen in einem Zeitbereich erhalten wird, wobei eine Amplitude der zweiten Sequenz eine Konstante ungleich Null ist und eine Länge der zweiten Sequenz N ist.

3. Verfahren nach Anspruch 2, wobei, wenn eine 1-Bit-Nachricht übertragen wird, zwei erste Sequenzen erfasst werden, wobei die Differenz zwischen zyklischen Verschiebungen im Zeitbereich der zwei ersten Sequenzen N/2 ist;
wobei, wenn eine 2-Bit-Nachricht übertragen wird, vier erste Sequenzen erfasst werden, wobei die Differenz zwischen zyklischen Verschiebungen im Zeitbereich von beliebigen zwei der vier ersten Sequenzen ein ganzzahliges Vielfaches von N/4 ist.

4. Signalempfangsverfahren, umfassend:

Empfangen (201) einer ersten Sequenz, die ein erstes Modulationssymbol trägt, über ein Übertragungssymbol, wobei die erste Sequenz, die das erste Modulationssymbol trägt, durch Multiplizieren des ersten Modulationssymbols an jeder von M Positionen der ersten Sequenz mit einer Länge von N erhalten wird, N eine positive ganze Zahl ist und M eine positive ganze Zahl kleiner als N ist, und wobei die M Positionen geradzahlige Punktpositionen der ersten Sequenz oder ungeradzahlige Punktpositionen der ersten Sequenz sind; und Durchführen einer Demodulation (202) unter Verwendung von Sequenzpunkten an den M Positionen der ersten Sequenz, die das erste Modulationssymbol trägt, sodass das erste Modulationssymbol erhalten wird, oder Durchführen einer nichtkohärenten Demodulation (202) unter Verwendung aller Sequenzpunkte der ersten Sequenz, die das erste Modulationssymbol trägt, sodass das erste Modulationssymbol erhalten wird, wobei das erste Modulationssymbol ein moduliertes Signal darstellt; wobei das erste Modulationssymbol eine modulierte Bestätigung, ACK-, eine modulierte Nichtbestätigung, NACK-Nachricht, oder eine modulierte Dateninformation ist;
wobei, wenn eine 1-Bit-ACK- oder NACK-Nachricht übertragen wird, das erste Modulationssymbol an jeder der M Positionen der ersten Sequenz multipliziert wird; und wobei das erste Modulationssymbol die ACK- oder NACK-Nachricht ist, die einer binären Phasenumtastungsmodulation unterzogen wurde.

5. Signalübertragungsvorrichtung, umfassend:

eine Erfassungseinheit (111), die konfiguriert ist, um eine erste Sequenz mit einer Länge von N zu erfassen, wobei N eine positive ganze Zahl ist;
eine Modulationseinheit (1112), die für Folgendes konfiguriert ist:

Multiplizieren eines ersten Modulationssymbols an jeder von M Positionen der ersten Sequenz, wobei das erste Modulationssymbol ein moduliertes Signal darstellt und M eine positive ganze Zahl kleiner als N ist, und wobei die M Positionen geradzahlige Punktpositionen der ersten Sequenz oder ungeradzahlige Punktpositionen der ersten Sequenz sind; wobei das erste Modulationssymbol eine modulierte Bestätigung, ACK-, eine modulierte Nichtbestätigung, NACK-Nachricht, oder eine modulierte Dateninformation ist; wobei, wenn eine 1-Bit-ACK-oder NACK-Nachricht übertragen wird, das erste Modulationssymbol an jeder der M Positionen der ersten Sequenz multipliziert wird; und wobei das erste Modulationssymbol die ACK- oder NACK-Nachricht ist, die einer binären Phasenumtastungsmodulation unterzogen wurde; und eine Übertragungseinheit (113), die konfiguriert ist, um die erste Sequenz zu übertragen, die das erste Modulationssymbol trägt.

6. Vorrichtung nach Anspruch 5, die ferner Folgendes umfasst:

eine Verschlüsselungseinheit, die konfiguriert ist, um die erste Sequenz, die das erste Modulationssymbol trägt, auf Zellebene zu verschlüsseln; und die Übertragungseinheit (113) konfiguriert ist, um eine verschlüsselte erste Sequenz zu senden, die das erste Modulationssymbol trägt.

7. Signalempfangsvorrichtung, umfassend:

eine Empfangseinheit (121), die konfiguriert ist, um eine erste Sequenz, die ein erstes Modulationssymbol trägt, über ein Übertragungssymbol zu empfangen, wobei die erste Sequenz, die das erste Modulationssymbol trägt, durch Multiplizieren des ersten Modulationssymbols an jeder von M Positionen der ersten Sequenz mit einer Länge von N erhalten wird, N eine positive ganze Zahl ist und M eine positive ganze Zahl kleiner als N ist, und wobei die M-Positionen geradzahlige Punktpositionen der ersten Sequenz oder ungeradzahlige Punktpositionen der ersten Sequenz sind; und eine Demodulationseinheit (122), die konfiguriert ist, um eine Demodulation unter Verwendung von Sequenzpunkten an den M Positionen der ersten Sequenz, die das erste Modulationssymbol trägt, durchzuführen, sodass das erste Modulationssymbol erhalten wird, oder um eine nicht-kohärente Demodulation unter Verwendung aller Sequenzpunkte der ersten Sequenz, die das erste Modulationssymbol trägt, durchzuführen, sodass das erste Modulationssymbol erhalten wird, wobei das erste Modulationssymbol ein moduliertes Signal darstellt; wobei das erste Modulationssymbol eine modulierte Bestätigung, ACK-, eine modulierte Nichtbestätigung, NACK-Nachricht, oder eine modulierte Dateninformation ist; wobei,wenn eine 1-Bit-ACK- oder NACK-Nachricht übertragen wird, das erste Modulationssymbol an jeder der M Positionen der ersten Sequenz multipliziert wird; und wobei das erste Modulationssymbol die ACK- oder NACK-Nachricht ist, die einer binären Phasenumtastungsmodulation unterzogen wurde.

8. Vorrichtung nach Anspruch 7, die ferner Folgendes umfasst: eine Kanalschätzungseinheit (123), die konfiguriert ist, um eine Kanalschätzung unter Verwendung von Sequenzpunkten an anderen Positionen als den M Positionen in der ersten Sequenz, die das erste Modulationssymbol trägt, durchzuführen.

9. Vorrichtung nach Anspruch 7, die ferner Folgendes umfasst: eine Entschlüsselungseinheit, die konfiguriert ist, um die erste Sequenz, die das erste Modulationssymbol trägt, auf Zellebene zu entschlüsseln.

**Revendications**

1. Procédé d'émission de signal, comprenant :

l'acquisition (101) d'une première séquence ayant une longueur N, où N est un entier positif ; la multiplication (102) d'un premier symbole de modulation au niveau de chacune des M positions de la première séquence, dans lequel le premier symbole de modulation représente un signal modulé, et M est un entier positif inférieur à N, et dans lequel les M positions sont des positions de point paires de la première séquence ou des positions de point impaires de la première séquence ; et l'émission (103) de la première séquence transportant le premier symbole de modulation via un symbole de transmission ;

dans lequel le premier symbole de modulation est un message d'accusé de réception modulé, ACK, d'accusé de réception négatif modulé, NACK, ou des informations de données modulées ; dans lequel lorsqu'un message ACK ou NACK à 1 bit est émis, le premier symbole de modulation est multiplié au niveau de chacune des M positions de la première séquence ; et dans lequel le premier symbole de modulation est le message ACK ou NACK qui a subi une modulation par déplacement de phase binaire.

2. Procédé selon la revendication 1, dans lequel la première séquence est obtenue à partir d'une seconde séquence via différentes rotations de phase dans un domaine fréquentiel, et/ou via différents décalages cycliques dans un domaine temporel dans lequel
une amplitude de la seconde séquence est une constante non nulle, et une longueur de la seconde séquence est N.

3. Procédé selon la revendication 2, dans lequel lorsqu'un message à 1 bit est émis, deux premières séquences sont acquises, dans lequel la différence entre des décalages cycliques dans le domaine temporel des deux premières séquences est N/2 ;
dans lequel lorsqu'un message à 2 bits est émis, quatre premières séquences sont acquises, dans lequel la différence entre des décalages cycliques dans le domaine temporel de deux quelconques des quatre premières séquences est un entier multiple de N/4.

4. Procédé de réception de signal, comprenant :

la réception (201) d'une première séquence transportant un premier symbole de modulation via un symbole de transmission, dans lequel la première séquence transportant le premier symbole de modulation est obtenue en multipliant le premier symbole de modulation au niveau de chacune des M positions de la première séquence ayant une longueur N, N est un entier positif, et M est un entier positif inférieur à N, et dans lequel les M positions sont des positions de point paires de la première séquence ou des positions de point impaires de la première séquence ; et la réalisation de la démodulation (202) à l'aide de points de séquence au niveau des M positions de la première séquence transportant le premier symbole de modulation de sorte que le premier symbole de modulation est obtenu ; ou la réalisation d'une démodulation (202) non cohérente à l'aide de tous les points de séquence de la première séquence transportant le premier symbole de sorte que le premier symbole de modulation est obtenu, dans lequel le premier symbole de modulation représente un signal modulé ; dans lequel le premier symbole de modulation est un message d'accusé de réception modulé, ACK, d'accusé de réception négatif modulé, NACK, ou des informations de données modulées ; dans lequel lorsqu'un message ACK ou NACK à 1 bit est émis, le premier symbole de modulation est multiplié au niveau de chacune des M positions de la première séquence ;
et dans lequel le premier symbole de modulation est le message ACK ou NACK qui a subi une modulation par déplacement de phase binaire.

5. Dispositif d'émission de signal, comprenant :

une unité d'acquisition (111), configurée pour acquérir une première séquence ayant une longueur N, où N est un entier positif ;
une unité de modulation (1112), configurée pour :

multiplier un premier symbole de modulation au niveau de chacune des M positions de la première séquence, dans lequel le premier symbole de modulation représente un signal modulé, et M est un entier positif inférieur à N, et dans lequel les M positions sont des positions de point paires de la première séquence ou des positions de point impaires de la première séquence ; dans lequel le premier symbole de modulation est un message d'accusé de réception modulé, ACK, d'accusé de réception négatif modulé, NACK, ou des informations de données modulées ; dans lequel lorsqu'un message ACK ou NACK à 1 bit est émis, le premier symbole de modulation est multiplié au niveau de chacune des M positions de la première séquence ; et dans lequel le premier symbole de modulation est le message ACK ou NACK qui a subi une modulation par déplacement de phase binaire ; et
une unité d'émission (113), configurée pour émettre la première séquence transportant le premier symbole de modulation.

6. Dispositif selon la revendication 5, comprenant en outre :

une unité de cryptage, configurée pour crypter, au niveau d'une cellule, la première séquence transportant le premier symbole de modulation ; et
l'unité d'émission (113) est configurée pour émettre une première séquence cryptée transportant le premier symbole de modulation.

7. Procédé de réception de signal, comprenant :
une unité de réception (121), configurée pour recevoir une première séquence transportant un premier symbole de modulation via un symbole de transmission, dans lequel la première séquence transportant le premier symbole de modulation est obtenue en multipliant le premier symbole de modulation au niveau de chacune des M positions de la première séquence ayant une longueur N, N est un entier positif, et M est un entier positif inférieur à N, et dans lequel les M positions sont des positions de point paires de la première séquence ou des positions de point impaires de la première séquence ; et une unité de démodulation (122), configurée pour réaliser la démodulation à l'aide de points de séquence au niveau des M positions de la première séquence transportant le premier symbole de modulation de sorte que le premier symbole de modulation est obtenu, ou pour réaliser la démodulation non cohérente à l'aide de tous les points de séquence de la première séquence transportant le premier symbole de sorte que le premier symbole de modulation est obtenu, dans lequel le premier symbole de modulation représente un signal modulé ; dans lequel le premier symbole est un message d'accusé de réception modulé, ACK, d'accusé de réception négatif NACK, ou des informations de données modulées ; dans lequel lorsqu'un message ACK ou NACK à 1 bit est émis, le premier symbole de modulation est multiplié au niveau de chacune des M positions de la première séquence ; et dans lequel le premier symbole de modulation est le message ACK ou NACK qui a subi une modulation par déplacement de phase binaire.

8. Dispositif selon la revendication 7, comprenant en outre :
une unité d'estimation de canal (123), configurée pour réaliser une estimation de canal à l'aide de points de séquence au niveau de positions autres que les M positions dans la première séquence transportant le premier symbole de modulation.

9. Dispositif selon la revendication 7, comprenant en outre :
une unité de décryptage, configurée pour décrypter, au niveau d'une cellule, la première séquence transportant le premier symbole de modulation.

Acquire a first sequence having a length of N ⟶ 101

Modulate a first modulation symbol at each of M positions of the first sequence, or divide the M positions of the first sequence into G groups and modulate a same modulation symbol in each of the G groups ⟶ 102

Transmit the first sequence carrying a corresponding modulation symbol over a transmission symbol ⟶ 103

## FIG. 1

Receive the first sequence carrying the first modulation symbol or the first sequence carrying G groups of modulation symbols over the transmission symbol ⟶ 201

Perform demodulation using sequence points at the M positions or perform non-coherent demodulation using all sequence points so that the corresponding modulation symbol is obtained ⟶ 202

## FIG. 2

Acquire a first sequence having a length of N      301

Modulate a first modulation symbol at each of M positions of the first sequence, or divide the M positions of the first sequence into G groups and modulate a same modulation symbol in each of the G groups      302

Transmit the first sequence carrying a corresponding modulation symbol over a transmission symbol      303

Receive the first sequence carrying the corresponding modulation symbol over the transmission symbol      304

Perform demodulation using sequence points at the M positions or perform non-coherent demodulation using all sequence points so that the corresponding modulation symbol is obtained      305

**FIG. 3**

Sequence $W(n)$

ACK/NACK

BPSK/QPSK

$s_k$

$s_k \cdot W(11)$

$s_k \cdot W(9)$

$s_k \cdot W(7)$

$s_k \cdot W(5)$

$s_k \cdot W(3)$

$s_k \cdot W(1)$

$W(10)$

$W(8)$

$W(6)$

$W(4)$

$W(2)$

$W(0)$

**FIG. 4**

Sequence $W(\mathrm{n})$

ACK/NACK

BPSK/QPSK

$s_k$

$s_k \cdot W(22)$
$s_k \cdot W(20)$
$s_k \cdot W(18)$

...      ...      ...

$s_k \cdot W(4)$
$s_k \cdot W(2)$
$s_k \cdot W(0)$

$W(23)$
$W(21)$
$W(19)$

$W(5)$
$W(3)$
$W(1)$

**FIG. 5**

Sequence $W(\mathrm{n})$

ACK/NACK

BPSK/QPSK

$s_k$

$s_k \cdot W_{SR}(22)$
$s_k \cdot W_{SR}(20)$
$s_k \cdot W_{SR}(18)$

...      ...      ...

$s_k \cdot W_{SR}(4)$
$s_k \cdot W_{SR}(2)$
$s_k \cdot W_{SR}(0)$

$W_{SR}(23)$
$W_{SR}(21)$
$W_{SR}(19)$

$W_{SR}(5)$
$W_{SR}(3)$
$W_{SR}(1)$

**FIG. 6**

**FIG. 7**

**FIG. 8**

**FIG. 9**

**FIG. 10**

| Acquisition unit 111 | — | Modulation unit 112 | — | Transmissio n unit 113 |

**FIG. 11**

Receiving unit 121 — Demodulatio n unit 122

Channel estimation unit 123

**FIG. 12**

Transmitting end 131 — Receiving end 132

**FIG. 13**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2557749 A2

- EP 2760171 A2